# EUROPEAN PATENT SPECIFICATION

(11) **EP 1 952 894 B1**
(45) Date of publication and mention of the grant of the patent: **20.10.2010**
(21) Application number: 07101494.8
(22) Date of filing: 31.01.2007
(51) Int. Cl.: B05B 12/14

(54) **Viscous fluid plug for separating fluids in a paint line**
Molch aus viskoser Flüssigkeit zum Trennen von Fluiden in einer Lackleitung
Racleur de liquide visqueux pour séparer des fluides dans une conduite de vernis

(43) Date of publication of application: 06.08.2008
(73) Proprietor: ABB AS, 1396 Billingstad (NO)
(72) Inventor: Mikalsen, Kenneth, 4340 Bryne (NO)
(74) Representative: Dahlstrand, Björn

(56) References cited:
- EP-A1- 0 904 848
- DE-A1- 10 120 077
- DE-A1- 19 830 029
- DE-A1- 19 962 224

## Description

### TECHNICAL AREA

The present invention relates to a method and an apparatus for pushing paint out of a paint line in an automated painting or coating equipment. The method will reduce the amount of excess paint, the amount of solvents needed and will also minimize the risk for one color to bleed into the next when changing color.

### TECHNICAL BACKGROUND

In many spray paint systems for industrial products, for example, automobile production, an automatic paint spraying apparatus is generally employed to paint products on the assembly line. This apparatus includes a color change means which allows the apparatus to spray more than one color of paint. When changing from spraying one paint color to another, the paint flow in the apparatus is stopped and the excess paint in the apparatus is driven out. Afterwards, the spray apparatus is flushed with solvent and air and the spray apparatus is then ready to be used to spray a different color of paint.

Many paint spraying assembly line operations change from one color of paint to another quite often and for some assembly line operations the change from one color of paint to another occurs for each painted object. The cumulative waste of paint that is flushed out of the apparatus over a period of time can be substantial and quite costly.

US Pat. No. 4,714,179 entitled "Positive displacement paint pushout apparatus" describes a method for shutting off the paint prior to the end of the painting cycle and using air or solvent to push the remaining paint through the paint line and use it to finish the paint job. Then, when the paint job is finished only a small amount of paint would be left in the apparatus between color changes. Consequently, only a small amount of paint would need to be discharged and disposed of.

US Pat. No. 6,554,204 entitled "Integrated gun flush controller" describes a method wherein when a new color is selected, the control system automatically triggers the gun and flushes the gun with solvent. When the solvent flush is finished the lines are refilled with new color paint without using excess paint as the new paint displaces the flush solvent.

The drawbacks with these solutions are that if the viscosity of the paint is higher than that of the solvent, the efficiency of the solvent push-out is reduced. This is due to the fact that the solvent then has a tendency to penetrate only the center volume of the paint line and leaving paint material attached to the walls of the paint line.

US Pat. No. 4,714,179 describes that one has to prepare the paint line for a color change by flushing with additional solvent and air to thorough clean the paint feed line. This increases the need for solvent and increases the cost. In the solution proposed by US Pat. No. 6,554,204 there is a risk for color mixing between first and second paint from first paint material still attached to the walls of the paint line as the second paint is fed into the paint line.

In US Pat. No. 5,882,428 entitled "Method of flushing a circulation system using first and second rigs" where the color in the paint line is separated from the solvent by a pig (a solid object) and the solvent is used to push the pig and remaining paint from the paint line. Before the second paint is introduced, a second pig is fed into the paint line and the second paint feed is used to push the solvent out of the paint line.

This method demands special valves and pig handling equipment both for entering the pigs in the paint line and to remove the pigs from the paint line.

EP904848 describes a method where a pig can be pushed back and forth in the paint line and the application also mentions that the pig could be a flowing media.

### SUMMARY OF THE INVENTION

A preferred embodiment of the present invention is to provide a method and an apparatus pushing paint out of a paint line in an automated painting or coating apparatus by introducing a fluid plug into the paint line and using a second liquid to push the fluid plug through the paint line and push the fluid plug through the applicator/spray gun. The method will reduce the amount of excess paint lost by color change, the amount of solvents needed and will also minimize the risk for one color to bleed into the next. Examples of areas where the present invention can be used are spray paint systems for industrial products, machine parts, appliances, boats or furniture.

The invention is especially useful for spray paint systems that need to change paint color often, one example would be the spray painting of automobile bodies.

The present invention is particularly useful for spray paint systems for waterborne paint. Waterborne paints have generally higher viscosity than solvent based paints and thus the waterborne paints have a greater tendency to cling to the paint line walls during solvent push out.

The present invention also allows the color changer to be placed outside of the paint booth without increasing the paint losses at color change. The placement outside of the paint booth will make service and repairs of the color changer simpler. The placement outside of the paint booth will increase the length and volume of the paint line but the present invention will prevent increasing paint losses when changing colors.

According to an embodiment of the invention, the second liquid comprises a solvent.

According to an embodiment of the invention, the second liquid comprises paint.

According to an embodiment of the invention, the method further comprises the step of introducing the fluid plug means into the paint line in the color changer.

According to an embodiment of the invention, the method further comprises the step of introducing the fluid plug means directly into the paint line somewhere between the color changer and applicator.

According to an embodiment of the invention, the method further comprises the step of closing the current paint supply before introducing the fluid plug means into the paint line.

According to an embodiment of the invention, the method further comprises the step of introducing the fluid plug means into the paint line at color change.

According to an embodiment of the invention, the method further comprises the step of introducing the fluid plug means into the paint line before the current paint job is finished.

According to an embodiment of the invention, the method further comprises the step of introducing the fluid plug means into the paint line when the amount of paint remaining in the paint line is sufficient to finish the current paint job.

According to an embodiment of the invention, the method further comprises the step of using the solvent supply to push the fluid plug means through the paint line to push the remaining paint from the paint line to finish the current paint job.

According to an embodiment of the invention, the method further comprises the step of destabilizing the fluid plug means before the fluid plug means is pushed through the applicator/spray gun.

According to an embodiment of the invention, the method further comprises the step of destabilizing the fluid plug means by pressure, temperature or solvents.

According to an embodiment of the invention, the method further comprises the step of removing the fluid plug means as it arrives at the applicator/spray gun by opening a valve means to a dump line.

According to an embodiment of the invention, the method further comprises the step of destroying form or integrity of the fluid plug means before or in the dump line.

According to an embodiment of the invention, the method further comprises the step of using a viscous fluid as fluid plug means.

According to an embodiment of the invention, the method further comprises the step of using a pressure sensitive fluid as fluid plug means.

According to an embodiment of the invention, the method further comprises the step of using a solvent-phobic fluid as fluid plug means.

According to an embodiment of the invention, the method further comprises the step of using a temperature sensitive fluid as fluid plug means.

According to an aspect of the invention, the apparatus has means for introducing a fluid plug means into said paint line of said automated painting or coating apparatus.

According to an embodiment of the invention, the apparatus comprises valve means for introducing the fluid plug means directly in the color changer.

According to an embodiment of the invention, the apparatus comprises valve means for introducing the fluid plug means during a color change.

According to an embodiment of the invention, said apparatus comprises valve means for introducing solvent into the paint line after the fluid plug means and using the solvent to push out remaining paint in the paint line.

According to an embodiment of the invention, said apparatus comprises valve means for introducing a second paint into the paint line after the fluid plug means and using the second paint to push out remaining paint in the paint line.

According to the invention, said apparatus comprises means for destabilizing the fluid plug means before said fluid plug means is pushed through the applicator/spray gun nozzle.

In a further aspect of the invention, the method may be carried out by use of a computing device comprising one or more microprocessor units or computers. The control unit(s) of the robot and/or automated painting or coating system comprises memory means for storing one or more computer programs for carrying out the improved methods for color change. Preferably such computer programs contain instructions for the processor to control performance of the method as mentioned above and described in more detail below.

### BRIEF DESCRIPTION OF THE DRAWINGS

The invention will be elucidated by reference to an embodiment partially illustrated in the drawings.
Figure 1 illustrates schematically the cleaning of a paint line with a solvent push-out according to the prior art.
Figure 2 illustrates schematically the cleaning of a paint line according to an embodiment of the invention.
Figure 3 illustrates the steps of emptying a paint line during color change, according to an embodiment of the invention.
Figure 4 illustrates a paint line with dump/waste line as one embodiment of the invention.
Figure 5 illustrates the cleaning of a double paint line according to an embodiment of the invention.
Figure 6 shows a flowchart illustrating an embodiment of the invention.
Figure 7 illustrates how a fluid plug can be injected into a paint line as an embodiment of the invention.

### DETAILED DESCRIPTION OF THE EMBODIMENTS

Detailed descriptions of the preferred embodiment are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

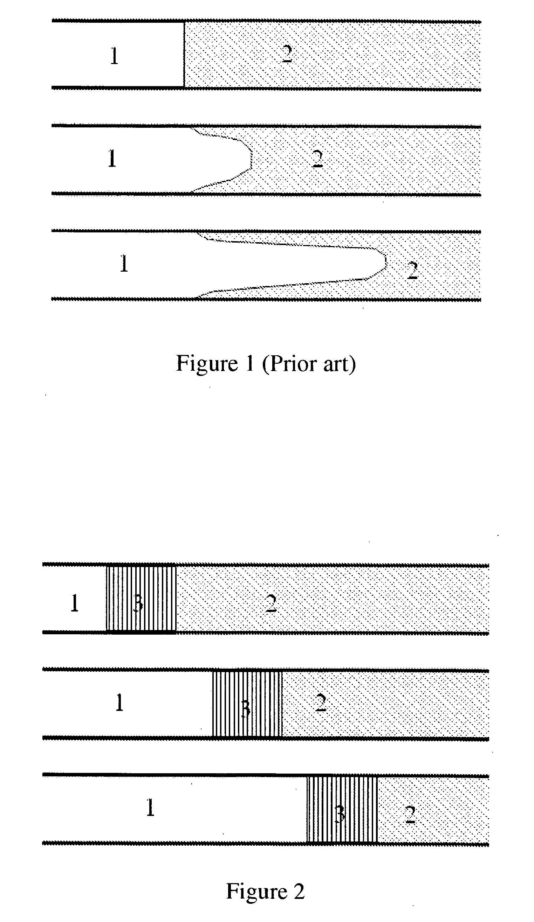

Figure 1 illustrates schematically the cleaning of a short path of the paint line with a solvent push-out according to the prior art. In the top part of figure 1 the paint 2 flow is turned off and solvent 1 starts to push out the paint 2. In the middle part of figure 1, the paint 2 is starting to be pushed out by the solvent 1 but due to the higher viscosity of the paint compared to the solvent, the solvent has a tendency to penetrate only the center volume of the paint line and leave paint material attached to the walls of the paint line. This is illustrated in the lower part of figure 1 which shows that more paint is left on the walls.

Figure 2 illustrates schematically the cleaning of a short path of the paint line according to an embodiment of the invention. In this illustration a high viscosity fluid plug 3 is arranged separating the solvent 1 and the paint 2 and used to push the paint fluid out of the paint line. As the solvent is pushing the paint out of the paint line, no paint remains attached to the paint line walls.

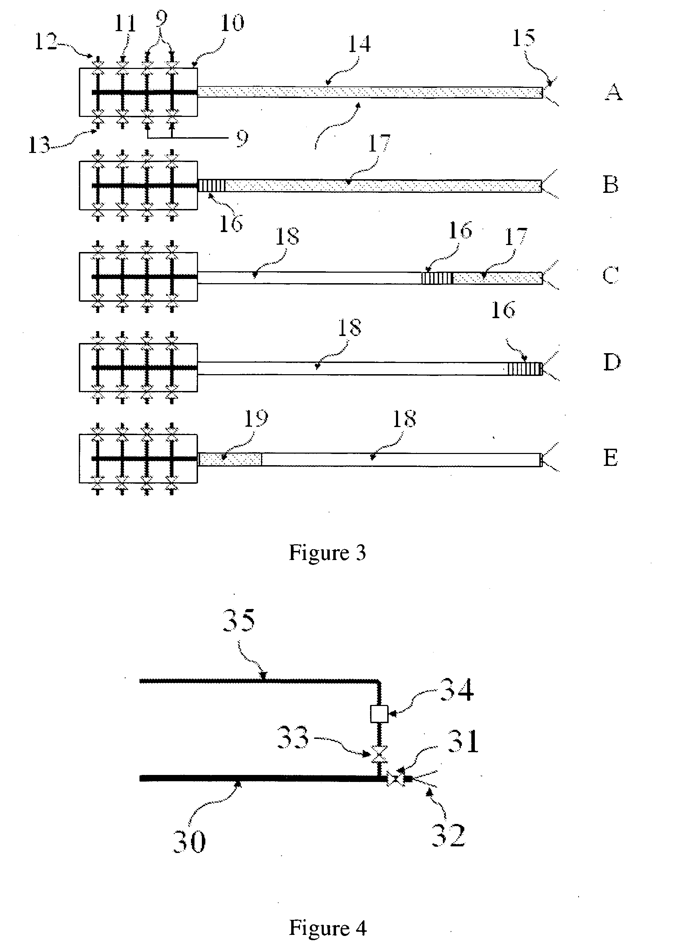

Figure 3 illustrates the steps of cleaning of a paint line in an automated painting or coating apparatus according to an embodiment of the invention. A color changing means 10 switches between different color-feeds 9. The color changing means 10 is also connected to solvent feed 12 and a pressurized air feed 13. The color changing means 10 is furthermore connected to a viscous fluid feed 11 that will, when introduced into paint line 14, act as a plug between the paint and the solvent. The color changing means 10 is connected to an applicator/spray gun 15 with a paint line 14.
Part A of figure 3 shows when the painting apparatus is painting with one color and the paint line 14 transports paint from one of the paint feeds 9 to the paint gun 15.
Part B of figure 3 shows the paint line 14 a short time before paint change operation occurs. The color changing means 10 closes the current paint feed 9 and opens highly viscous fluid 11 feed which pushes some paint away and generates a plug of viscous fluid 16. The rest of the paint line 14 is filled with the current paint color 17.
Part C of figure 3 shows when the painting job is finished. The solvent or solvent/air mix 18 has pushed out most of the paint 17 in the paint line and the viscous fluid plug 16 is close to the applicator/paint gun 15. From this point on the ejections from the spray gun 15 are dumped.
Part D of figure 3 shows when all the paint has been ejected from the paint line 14. The viscous fluid plug 16 has to be removed, either by pressing the plug through the applicator /paint gun 15 or by an arrangement where the plug is removed by opening valves to a waste/dump line (not shown).
Part E of figure 3 shows when the paint line 14 has been cleaned by solvent or solvent/air mix 18 and the new paint color 19 pushes the solvent or solvent/air mix 18 out of the paint line 14. When the new paint color 19 has reached the applicator/spray gun 15 the automated painting or coating apparatus is ready to start painting with the new color.

The fluid plug 16 means may be any type of viscous fluid or liquid that supports the push of a substance or paint out of the paint line. Examples of possible fluids or liquids are; pure liquids, suspensions, emulsions, solutions or colloids. The fluid plug 16 means can be a pressure sensitive gel, which has different viscosity at different pressure to facilitate the ejection of the fluid plug through the paint gun or dump line. The fluid plug means 16 may be a solvent-phobic liquid to prevent intermixing with solvent pushing the fluid plug and solvent based paint which is pushed out of the paint pipe 14. The fluid plug 16 means may be a temperature sensitive fluid which has different viscosity at different temperatures to facilitate the ejection of the fluid plug trough the paint gun or dump line. The fluid plug 16 means may have any combination of the properties, highly viscous, pressure sensitive, temperature sensitive and solvent-phobic.

Figure 4 illustrates an embodiment of the invention discussed in Part D of figure 3. The paint line 30 connected with the applicator/paint gun 32 is a equipped with a valve means 31 that prevents the fluid plug means 16 from reaching the applicator/paint gun 32. The valve means closes the paint flow just before the fluid plug means 16 reaches the valve means 31 and valve means 33 opens to route the fluid plug means 16 into a waste/dump line 35. The paint line 30 and dump line 35 can then be cleaned with solvent and air as is known in the art. By closing valve means 33 and opening valve means 31 the applicator/paint gun 32 can then be cleaned with solvent and air. The dump line 35 can be arranged with means 34 for destroying form or integrity of the fluid plug means 16 thereby facilitating easier transport through the dump line 35. The means 34 for destroying the fluid plug means 16 can be, for example; a restriction of the line diameter, knives or wires arranged in a mesh to mechanically destroy the fluid plug, a heating body to thermally destroy the fluid plug, solvent injection to dissolve the fluid plug, etc.

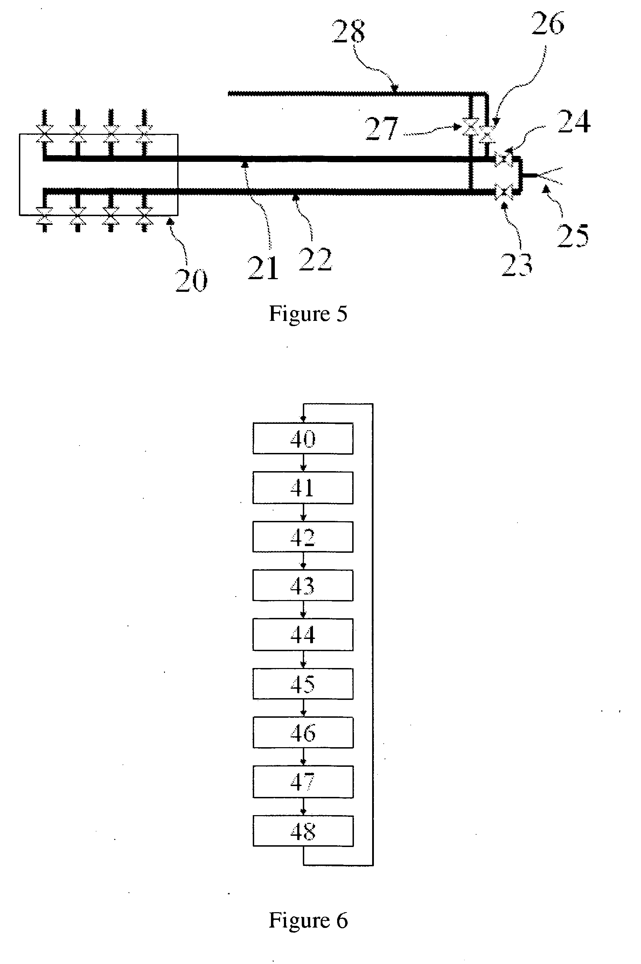

Figure 5 illustrates the cleaning of a double paint line known as an A-B system according to an embodiment of the invention. A color changing means 20 opens and closes valve means connected to different color feeds, solvent feed, pressurized air feed, and fluid plug means feed. The color changing means 20 feeds two color lines 21, 22 and in the end of each color lines 21, 22, two valve means 23, 24 connects to an applicator/spray gun 25. Each color line 21, 22 is connected to a waste/dump line 28 over valve means 26, 27.
A possible way of doing a color change according to an embodiment of the present invention in a two paint line system will now be described. Paint from the color changing means 20 is routed over paint line 21 to the applicator/spray gun 25. Paint line 22 is ready and filled with the next needed color. When the paint job is close to be finished, the color changing means 20 closes current paint feed and introduces a fluid plug means 16 into paint line 21. The color changing means 20 switches to solvent or solvent/air mix which pushes the fluid plug means 16 and the remaining paint in the paint line 21 through the paint gun 25 to finish the current paint job. The remaining paint and fluid plug means 16 in paint line 21 is dumped into dump line 28 by closing valve 24 and opening valve 26. The paint line 21 and dump line 28 is then flushed by an air/solvent mix. By closing valve 26 and opening valve 24 the applicator/spray gun 25 is then cleaned by air/solvent mix. Closing the valve 24 and by opening the valve 23, the applicator/spray gun 25 is fed by the new paint in paint line 22. During this painting the paint line 21 can be filled with the next paint by opening valve means 26 and using the next paint to push out the solvent/air mix of paint line 21.

Figure 6 shows a flowchart illustrating an embodiment of the method of the invention.
Block 40; is the normal painting/coating operation as shown in section A in figure 3.
Block 41; during normal painting/coating operation the control system keeps track of how much paint is needed to finish the current paint job. When the amount present in the paint line is enough to finish the current paint job the system gives a signal to close paint feed.
Block 42; a fluid plug means is injected or let flow into the paint line as shown in section B in figure 3.
Block 43; the solvent feed is opened to push the fluid plug means down the paint line while the current paint job is continued as shown in section C in figure 3.
Block 44; when the current paint job is finished the remaining paint in the paint line is pushed out in a paint dump.
Block 45; the fluid plug means has reached the end of the paint line and is discarded, either by pushing the fluid plug means out of the applicator or by ejecting the fluid plug means in a waste/dump line.
Block 46; the paint line is cleaned by solvent or a mixture of solvent and air.
Block 47; when the paint line is cleared and clean, the paint feed for the next paint job is opened and the paint line is filled with the new paint as shown in section E in figure 3. Block 48; when the whole paint line is filled with paint the next paint job can start and one are returned to block 40.

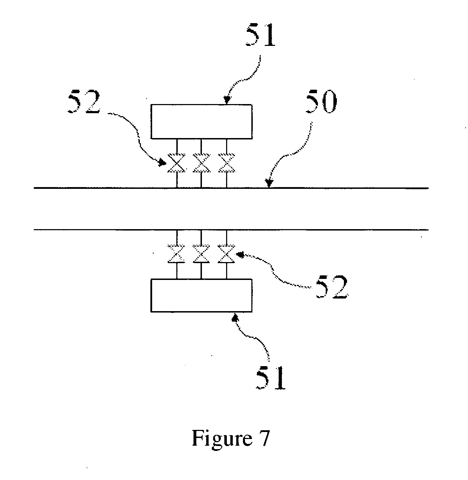

Figure 7 illustrates a further embodiment of the present invention. The fluid plug means is injected or added to the paint line 50 through one or several injection valves or nozzles 52 arranged around the paint line 50. The fluid plug means can be injected anywhere between the color changer 10 and the applicator 15. A fluid plug source 51 arranged around the paint line 50 feeds the injection valves or nozzles 52.

Another embodiment of the present invention is to introduce an additional fluid plug means 16 before the new color is introduced into the paint line 14 and use the new color to push the fluid plug means 16 through the paint line 14 to make sure that all solvent is removed from the paint line 14.

The above described solutions may also be adapted to push a number of different substances from a supply line in an automated painting or coating apparatus. Example of substances for which the present invention can be used are; paint, waterborne paint, primer, base coat, top coat, clear-coat, paint component, 2-component paint, protective coating, glue, adhesive, sealant, protective coatings, waxes, adhesives and even abrasive materials.

Methods of the invention may be supervised, controlled or carried out by one or more computer programs. One or more microprocessors (or processors or computers) comprise a central processing unit CPU connected to or comprised in a control unit of the coating application system described. Said processors, PLCs or computers are used to perform the steps of the methods according to one or more aspects of the invention, as described above and for example with reference to Figure 6. The computer programs for carrying out methods according to the invention may also be run on one or more general purpose industrial microprocessors or PLCs or computers instead of one or more specially adapted computers or processors.

The computer program comprises computer program code elements or software code portions that make the computer or processor perform the methods using equations, algorithms, data, stored values, calculations and the like for the methods previously described, and for example in relation to the flowchart of Figure 6. A part of the program may be stored in a processor as above, but also in a ROM, RAM, PROM, EPROM or EEPROM chip or similar memory means. The program may be stored at least in a memory storage device in a control unit or robot control unit of a system comprising the improved power supply device. Some of the programs in part or in whole may also be stored locally (or centrally) on, or in, a memory storage device of a control unit or on other suitable computer readable medium such as a magnetic disk, CD-ROM or DVD disk, hard disk, magneto-optical memory storage means, in volatile memory, in flash memory, as firmware, or stored on a data server. Other known and suitable media, including removable memory media, flash memories, hard drives etc. may also be used. The program may also in part be supplied from a data network, including a public network such as the Internet.

## Claims

1. A method for pushing paint out of a paint line (14) in an automated painting or coating apparatus, introducing a fluid plug means (16) into the paint line (14) of said automated painting or coating apparatus and using a second liquid to push said fluid plug means (16) through said paint line (14) **characterized by**
that the method further comprises the step of pushing the fluid plug means (16) through the applicator/spray gun.

2. A method according to claim 1, wherein said second liquid comprises a solvent.

3. A method according to claim 1, wherein said second liquid comprises paint.

4. A method according to any of the claims 1-3, further comprising the step of introducing the fluid plug means (16) into the paint line (14) in the color changer (10).

5. A method according to any of the claims 1-3, further comprising the step of introducing the fluid plug means (16) directly into the paint line (14) arranged between the color changer (10) and applicator (15).

6. A method according to any of the claims 1-5, further comprising the step of closing the current paint supply before introducing the fluid plug means (16) into the paint line (14).

7. A method according to any of the claims 1-6, further comprising the step of introducing the fluid plug means (16) into the paint line at color change.

8. A method according to any of the claims 1-7, further comprising the step of introducing the fluid plug means (16) into the paint line before the current paint job is finished.

9. A method according to any of the claims 1-8, further comprising the step of introducing the fluid plug means (16) into the paint line when the amount of paint remaining in the paint line is sufficient to finish the current paint job.

10. A method according to any of the claims 1-9, further comprising the step of using the solvent supply to push the fluid plug means (16) through the paint line to push the remaining paint from the paint line to finish the current paint job.

11. A method according to any of the claims 1-10, further comprising the step of destabilizing the fluid plug means (16) before the fluid plug means is pushed through the applicator/spray gun.

12. A method according to claim 11, further comprising the step of destabilizing the fluid plug means (16) by pressure, temperature or solvents.

13. A method according to any of the claims 1-11, further comprising the step of using a viscous fluid as fluid plug means (16).

14. A method according to any of the claims 1-12, further comprising the step of using a pressure sensitive fluid as fluid plug means (16).

15. A method according to any of the claims 1-12, further comprising the step of using a solvent-phobic fluid as fluid plug means (16).

16. A method according to any of the claims 1-12, further comprising the step of using a temperature sensitive fluid as fluid plug means (16).

17. An apparatus for pushing paint out of a paint line (14) in an automated painting or coating apparatus, the apparatus has means for introducing a fluid plug means (16) into a paint line (14) of an automated painting or coating apparatus,
the apparatus comprises means for pushing the fluid plug means (16) through the applicator/spray gun,
**characterized in that**
said apparatus comprises means for destabilizing the fluid plug means (16) before said fluid plug means is pushed through the applicator/spray gun nozzle (15).

18. An apparatus according to claim 17, wherein said apparatus comprises valve means for introducing the fluid plug means (16) directly into the color changer (10).

19. An apparatus according to any of the claims 17-18, wherein said apparatus comprises valve means for introducing the fluid plug means during a color change.

20. An apparatus according to any of the claims 17-19, wherein said apparatus comprises valve means for introducing solvent into the paint line after the fluid plug means (16) and using the solvent to push out remaining paint in the paint line.

21. An apparatus according to any of the claims 17-20, wherein said apparatus comprises valve means for introducing a second paint into the paint line after the fluid plug means (16) and using the second paint to push out remaining paint in the paint line.

22. Use of a system according to any of claims 17-21 to carry out application of non-conductive or electrically conductive fluid materials comprising any from the list of: paint, waterborne paint, primer, base coat, top coat, clearcoat, paint component, 2k paint, protective coating, glue, adhesive, sealant.

## Patentansprüche

1. Ein Verfahren zum Herausdrücken von Lack aus einer Lackleitung (14) in einem automatisierten Lackier- oder Beschichtungsvorrichtung, Einführen eines Fluidpropfmittels (16) in die Lackierleitung (14) der automatisierten Lackier- oder Beschichtungsvorrichtung und Verwenden einer zweiten Flüssigkeit, um das Fluidpropfmittel (16) durch die Lackleitung (14) zu drücken,
**dadurch gekennzeichnet, dass**
das Verfahren weiter den Schritt umfasst, das Fluidpropfmittel (16) durch den Applikator/die Spritzpistole zu drücken.

2. Ein Verfahren nach Anspruch 1, wobei die zweite Flüssigkeit ein Lösungsmittel umfasst.

3. Ein Verfahren nach Anspruch 1, wobei die zweite Flüssigkeit Lack umfasst.

4. Ein Verfahren nach einem der Ansprüche 1-3, welches weiter den Schritt umfasst, das Fluidpropfmittel (16) in dem Farbveränderer (10) in die Lackleitung (14) einzuführen.

5. Ein Verfahren nach einem der Ansprüche 1-3, welches weiter den Schritt umfasst, das Fluidpropfmittel (16) direkt in die Lackleitung (14) einzuführen, welche zwischen dem Farbveränderer (10) und dem Applikator (15) angeordnet ist.

6. Ein Verfahren nach einem der Ansprüche 1-5, welches weiter den Schritt umfasst, die gegenwärtige Lackversorgung vor dem Einführen des Fluidpropfmittels (16) in die Lackleitung (14) zu schließen.

7. Ein Verfahren nach einem der Ansprüche 1-6, welches weiter den Schritt umfasst, das Fluidpropfmittel (16) in die Lackleitung bei Farbveränderung einzuführen.

8. Ein Verfahren nach einem der Ansprüche 1-7, welches weiter den Schritt umfasst, das Fluidpropfmittel (16) in die Lackleitung einzuführen, bevor der gegenwärtige Lackiervorgang beendet ist.

9. Ein Verfahren nach einem der Ansprüche 1-8, welches weiter den Schritt umfasst, das Fluidpropfmittel (16) in die Lackleitung einzuführen, wenn die in der Lackleitung verbliebene Menge von Lack ausreichend ist, um den gegenwärtigen Lackiervorgang zu beenden.

10. Ein Verfahren nach einem der Ansprüche 1-9, welches weiter den Schritt umfasst, die Lösungsmittelversorgung zu verwenden, um das Fluidpropfmittel (16) durch die Lackleitung zu drücken, um den verbliebenen Lack aus der Lackleitung zu drängen, um den gegenwärtigen Lackiervorgang zu beenden.

11. Ein Verfahren nach einem der Ansprüche 1-10, welches weiter den Schritt umfasst, das Fluidpropfmittel (16) zu destabilisieren, bevor das Fluidpropfmittel durch den Applikator/die Spritzpistole gedrückt wird.

12. Ein Verfahren nach Anspruch 11, welches weiter den Schritt umfasst, das Fluidpropfmittel (16) durch Druck, Temperatur oder Lösungsmittel zu destabilisieren.

13. Ein Verfahren nach einem der Ansprüche 1-11, welches weiter den Schritt umfasst, ein viskoses Fluid als Fluidpropfmittel (16) zu verwenden.

14. Ein Verfahren nach einem der Ansprüche 1-12, welches weiter den Schritt umfasst, ein druckempfindliches Fluid als Fluidpropfmittel (16) zu verwenden.

15. Ein Verfahren nach einem der Ansprüche 1-12, welches weiter den Schritt umfasst, ein lösungsmittelfeindliches Fluid als Fluidpropfmittel (16) zu verwenden.

16. Ein Verfahren nach einem der Ansprüche 1-12, welches weiter den Schritt umfasst, ein temperaturempfindliches Fluid als Fluidpropfmittel (16) zu verwenden.

17. Eine Vorrichtung zum Herausdrücken von Lack aus einer Lackleitung (14) in einer automatisierten Lackier- oder Beschichtungsvorrichtung, wobei die Vorrichtung ein Mittel aufweist zum Einführen eines Fluidpropfmittels (16) in eine Lackierleitung (14) einer automatisierten Lackier- oder Beschichtungsvorrichtung und die Vorrichtung ein Mittel umfasst zum Drücken des Fluidpropfmittels (16) durch den Applikator/die Spritzpistole, **dadurch gekennzeichnet, dass**
die Vorrichtung ein Mittel umfasst zum Destabilisieren des Fluidpropfmittels (16), bevor das Fluidpropfmittel durch die Applikator-/Spritzpistolendüse (15) gedrückt wird.

18. Eine Vorrichtung nach Anspruch 17, wobei die Vorrichtung ein Ventilmittel umfasst zum direkten Einführen des Fluidpropfmittels (16) in den Farbveränderer (10).

19. Eine Vorrichtung nach einem der Ansprüche 17-18, wobei die Vorrichtung ein Ventilmittel umfasst zum Einführen des Fluidpropfmittels während einer Farbveränderung.

20. Eine Vorrichtung nach einem der Ansprüche 17-19, wobei die Vorrichtung ein Ventilmittel umfasst zum Einführen eines Lösungsmittels in die Lackleitung nach dem Fluidpropfmittel (16) und zum Verwenden des Lösungsmittels, um verbleibenden Lack in der Lackleitung herauszudrücken.

21. Eine Vorrichtung nach einem der Ansprüche 17-20, wobei die Vorrichtung ein Ventilmittel umfasst zum Einführen eines zweiten Lacks in die Lackleitung nach dem Fluidpropfmittel (16) und zum Verwenden des zweiten Lacks, um verbleibenden Lack in der Lackleitung herauszudrücken.

22. Verwendung eines Systems gemäß einem der Ansprüche 17-21, um eine Aufbringung von nichtleitenden oder elektrisch leitenden Fluidmaterialien auszuführen, welche irgendeines aus der Liste umfassen: Lack, wasserbasierter Lack, Grundierung, Basislack, Decklack, Klarlack, Lackkomponente, 2k-Lack, Schutzlackierung, Klebstoff, Haftmittel, Versiegelungsmittel.

## Revendications

1. Procédé pour chasser de la peinture d'un conduit (14) de peinture dans un appareil automatisé d'application de peinture ou de vernis, introduire un moyen formant tampon fluide (16) dans le conduit (14) de peinture dudit appareil automatisé d'application de peinture ou de vernis et utiliser un second liquide pour pousser ledit moyen formant tampon fluide (16) dans ledit conduit (14) de peinture,
**caractérisé**
**en ce que** le procédé comprend en outre l'étape consistant à pousser le moyen formant tampon fluide (16) dans l'applicateur/le pistolet de pulvérisation.

2. Procédé selon la revendication 1, dans lequel ledit second liquide est constitué par un solvant.

3. Procédé selon la revendication 1, dans lequel ledit second liquide est constitué par de la peinture.

4. Procédé selon l'une quelconque des revendications 1 à 3, comprenant en outre l'étape consistant à introduire le moyen formant tampon fluide (16) à intérieur du conduit (16) de peinture dans le changeur de couleur.

5. Procédé selon l'une quelconque des revendications 1 à 3, comprenant en outre l'étape consistant à introduire le moyen formant tampon fluide (16) directement à intérieur du conduit (14) de peinture disposé entre le changeur (10) de couleur et l'applicateur (15).

6. Procédé selon l'une quelconque des revendications 1 à 5, comprenant en outre l'étape consistant à arrêter la fourniture de peinture en cours avant d'introduire le moyen formant tampon fluide (16) dans le conduit (14) de peinture.

7. Procédé selon l'une quelconque des revendications 1 à 6, comprenant en outre l'étape consistant à introduire le moyen formant tampon fluide (16) dans le conduit de peinture à l'occasion d'un changement de couleur.

8. Procédé selon l'une quelconque des revendications 1 à 7, comprenant en outre l'étape consistant à introduire le moyen formant tampon fluide (16) dans le conduit de peinture avant la fin du travail de peinture en cours.

9. Procédé selon l'une quelconque des revendications 1 à 8, comprenant en outre l'étape consistant à introduire le moyen formant tampon fluide (16) dans le conduit de peinture quand la quantité de peinture restant dans le conduit de peinture est suffisante pour terminer le travail de peinture en cours.

10. Procédé selon l'une quelconque des revendications 1 à 9, comprenant en outre l'étape consistant à utiliser la fourniture de solvant pour pousser le moyen d'arrêt (26) de fluide dans le conduit de peinture afin d'expulser le reste de peinture du conduit de peinture pour terminer le travail de peinture en cours.

11. Procédé selon l'une quelconque des revendications 1 à 10, comprenant en outre l'étape consistant à déstabiliser le moyen formant tampon fluide (16) avant que le moyen d'arrêt de fluide ne soit poussé dans l'applicateur/le pistolet de pulvérisation.

12. Procédé selon la revendication 11, comprenant en outre l'étape consistant à déstabiliser le moyen formant tampon fluide (16) par la pression, la température ou des solvants.

13. Procédé selon l'une quelconque des revendications 1 à 11, comprenant en outre l'étape consistant à utiliser un fluide visqueux comme moyen formant tampon fluide (16).

14. Procédé selon l'une quelconque des revendications 1 à 12, comprenant en outre l'étape consistant à utiliser un fluide sensible à la pression comme moyen formant tampon fluide (16).

15. Procédé selon l'une quelconque des revendications 1 à 12, comprenant en outre l'étape consistant à utiliser comme moyen formant tampon fluide un fluide ne supportant pas les solvants.

16. Procédé selon l'une quelconque des revendications 1 à 12, comprenant en outre l'étape consistant à utiliser un fluide sensible à la température comme moyen formant tampon fluide (16).

17. Dispositif pour expulser de la peinture d'un conduit (14) de peinture dans un appareil automatisé d'application de peinture ou de vernis, le dispositif ayant un moyen pour introduire un moyen formant tampon fluide (16) dans un conduit (14) de peinture d'un appareil automatisé d'application de peinture ou de vernis, le dispositif comportant un moyen pour pousser le moyen formant tampon fluide (16) dans l'applicateur/le pistolet de pulvérisation,
**caractérisé**
**en ce que** ledit dispositif comporte un moyen pour déstabiliser le moyen formant tampon fluide (16) avant que ledit moyen formant tampon fluide ne soit poussé dans le gicleur (15) de l'applicateur/du pistolet de pulvérisation.

18. Dispositif selon la revendication 17, ledit dispositif comprenant des moyens formant robinets pour introduire le moyen formant tampon fluide (16) directement à l'intérieur du changeur (10) de couleur.

19. Dispositif selon la revendication 17, ledit dispositif comprenant des moyens formant robinets pour introduire le moyen formant tampon fluide pendant un changement de couleur.

20. Dispositif selon l'une quelconque des revendications 17 à 19, ledit dispositif comprenant des moyens formant robinets pour introduire un solvant dans le conduit de peinture après le moyen formant tampon fluide (16) et utiliser le solvant pour expulser la peinture restant dans le conduit de peinture.

21. Dispositif selon l'une quelconque des revendications 17 à 20, ledit dispositif comprenant des moyens formant robinets pour introduire une seconde peinture dans le conduit de peinture après le moyen formant tampon fluide et utilisant la seconde peinture pour chasser la peinture restant dans le conduit de peinture.

22. Utilisation d'un système selon l'une quelconque des revendications 17 à 21 pour effectuer l'application de substances fluides non conductrices ou conductrices de l'électricité, constituées par l'une quelconque des substances de la liste suivante : peinture, peinture à base d'eau, apprêt, couche de fond, couche de finition, clearcoat, constituant de peinture, peinture 2K, revêtement protecteur, colle, adhésif, obturant.
